# EUROPEAN PATENT APPLICATION

(11) **EP 2 290 340 A1**
(43) Date of publication of application: **02.03.2011**
(21) Application number: 09746523.1
(22) Date of filing: 07.05.2009
(51) Int. Cl.: G01J 3/18, G02B 7/00

(54) **METHOD FOR MANUFACTURING SPECTRAL MODULE AND SPECTRAL MODULE**

(30) Priority: 15.05.2008 JP 2008128687; 05.12.2008 JP 2008311020
(71) Applicant: Hamamatsu Photonics K.K., Hamamatsu-shi, Shizuoka 435-8558 (JP)
(72) Inventor: SHIBAYAMA Katsumi, Hamamatsu-shi Shizuoka 435-8558 (JP); YOKINO Takafumi, Hamamatsu-shi Shizuoka 435-8558 (JP); KASAHARA Takashi, Hamamatsu-shi Shizuoka 435-8558 (JP); ITO Masashi, Hamamatsu-shi Shizuoka 435-8558 (JP); YOSHIDA Anna, Hamamatsu-shi Shizuoka 435-8558 (JP)
(74) Representative: HOFFMANN EITLE
(86) International application number: PCT/JP2009/058618
(87) International publication number: WO 2009/139316

(57) **Abstract**

In a method for manufacturing a spectral module 1, a photodetecting unit 10 constructed by bonding a photodetector 5 and a light transmitting plate 56 together is attached to a front face 2a of a substrate 2 by an optical resin agent 63. Here, a light transmitting hole 50 of the photodetector 5 is covered with a light transmitting plate 56, whereby the optical resin agent 63 is prevented from intruding into the light transmitting hole 50. When preparing the photodetecting unit 10, a semiconductor substrate 91 provided with a photodetecting section 5a and the light transmitting plate 56 are bonded together, and then the semiconductor substrate 91 is formed with the light transmitting hole 50, whereby matters which may cause refraction, scattering, and the like to occur can reliably be prevented from intruding into the light transmitting hole 50.

## Description

### Technical Field

The present invention relates to a method for manufacturing a spectral module which spectrally resolves and detects light and a spectral module.

### Background Art

As conventional spectral modules, those described in Patent Literatures 1 to 3 have been known, for example. Patent Literature 1 discloses a spectral module comprising a main unit which transmits light therethrough, a spectroscopic unit which spectrally resolves light having entered the main unit from a predetermined surface side of the main unit and reflecting the light toward the predetermined surface, and a photodetector for detecting the light spectrally resolved and reflected by the spectroscopic unit, while the photodetector is formed with a light transmitting hole through which the light proceeding to the spectroscopic unit passes. Such a spectral module can prevent deviations from occurring in the relative positional relationship between the light transmitting hole and a photodetecting section of the photodetector.

### Citation List

### Patent Literature

Patent Literature 1: Japanese Patent Application Laid-Open No. 2004-354176
Patent Literature 2: Japanese Patent Application Laid-Open No. 2000-65642
Patent Literature 3: Japanese Patent Application Laid-Open No. 4-294223

### Summary of Invention

### Technical Problem

Meanwhile, since the light entering the main unit may be refracted, scattered, and so forth if a resin agent for attaching the photodetector to the main unit intrudes into the light transmitting hole of the photodetector, it is very important for a spectral module such as the one mentioned above to prevent refraction, scattering, and the like from occurring and make the light appropriately enter the main unit.

In view of such circumstances, it is an object of the present invention to provide a method for manufacturing a spectral module and a spectral module which can make the light appropriately enter the main unit.

### Solution to Problem

For achieving the above-mentioned object, the method for manufacturing a spectral module in accordance with the present invention is a method for manufacturing a spectral module comprising a main unit for transmitting light therethrough, a spectroscopic unit for spectrally resolving light having entered the main unit from a predetermined surface side of the main unit and reflecting the light toward the predetermined surface, and a photodetector for detecting the light spectrally resolved by the spectroscopic unit; the method comprising the steps of preparing a photodetecting unit constructed by bonding together the photodetector formed with a light transmitting hole for transmitting therethrough light proceeding to the spectroscopic unit and a light transmitting member for transmitting therethrough light proceeding to the spectroscopic unit through the light transmitting hole and light proceeding from the spectroscopic unit to a photodetecting section of the photodetector, and attaching the photodetecting unit to the main unit by interposing a first optical resin agent between the predetermined surface and the light transmitting member.

In this method for manufacturing a spectral module, a photodetecting unit constructed by bonding a photodetector and a light transmitting member together is attached to a main unit by interposing a first optical resin agent between a predetermined surface of the main unit and the light transmitting member. Therefore, when attaching the photodetecting unit to the main unit with the first optical resin agent, the light transmitting hole of the photodetector is covered with the light transmitting member, whereby the first optical resin agent is prevented from intruding into the light transmitting hole. This makes it possible to manufacture a spectral module which prevents refraction, scattering, and the like from occurring, so that light can enter the main unit appropriately.

Preferably, in the method for manufacturing a spectral module in accordance with the present invention, in the step of preparing the photodetecting unit, a photodetecting substrate provided with the photodetecting section and the light transmitting member are bonded together and then the photodetecting substrate is formed with the light transmitting hole. This can reliably prevent matters which may cause refraction, scattering, and the like to occur from intruding into the light transmitting hole.

Here, the photodetecting substrate and the light transmitting member may be bonded together by a second optical resin agent or by direct bonding. These can bond the photodetecting substrate and the light transmitting member easily and reliably.

Preferably, when bonding the photodetecting substrate and the light transmitting member together by the second optical resin agent, the second optical resin agent approaching the light transmitting hole is removed, while the photodetecting substrate is formed with the light transmitting hole. This can more reliably prevent the light entering the main unit from being refracted, scattered, and so forth.

The spectral module in accordance with the present invention comprises a main unit for transmitting light therethrough, a spectroscopic unit for spectrally resolving light having entered the main unit from a predetermined surface side of the main unit and reflecting the light toward the predetermined surface, and a photodetector for detecting the light spectrally resolved by the spectroscopic unit; wherein a photodetecting unit is constructed by bonding together the photodetector formed with a light transmitting hole for transmitting therethrough light proceeding to the spectroscopic unit and a light transmitting member for transmitting therethrough light proceeding to the spectroscopic unit through the light transmitting hole and light proceeding from the spectroscopic unit to a photodetecting section of the photodetector; and wherein the photodetecting unit is attached to the main unit by a first optical resin agent interposed between the predetermined surface and the light transmitting member.

This spectral module allows light to enter the main unit appropriately, since the light transmitting member prevents the first optical resin agent from intruding into the light transmitting hole as mentioned above.

### Advantageous Effects of Invention

The present invention prevents refraction, scattering, and the like from occurring in the spectral module, so that light can enter the main unit appropriately.

### Brief Description of Drawings

**[****Fig. 1****]** is a plan view of an embodiment of the spectral module in accordance with the present invention;
**[****Fig. 2****]** is a sectional view taken along the line II-II of Fig. 1;
**[****Fig. 3****]** is a bottom plan view of the spectral module of Fig. 1;
**[****Fig. 4****]** is an enlarged sectional view of a main part of the spectral module of Fig. 1;
**[****Fig. 5****]** is a sectional view illustrating a manufacturing process of a photodetecting unit in the spectral module of Fig. 1;
**[****Fig. 6****]** is a sectional view illustrating a manufacturing process of the photodetecting unit in the spectral module of Fig. 1;
**[****Fig. 7****]** is a sectional view illustrating a manufacturing process of the photodetecting unit in the spectral module of Fig. 1;
**[****Fig. 8****]** is a sectional view illustrating a manufacturing process of the photodetecting unit in the spectral module of Fig. 1;
**[****Fig. 9****]** is a sectional view of the photodetecting unit in another embodiment of the spectral module in accordance with the present invention;
**[****Fig. 10****]** is a sectional view of the photodetecting unit in still another embodiment of the spectral module in accordance with the present invention;
**[****Fig. 11****]** is a sectional view of still another embodiment of the spectral module in accordance with the present invention;
**[****Fig. 12****]** is a sectional view illustrating a manufacturing process of the photodetecting unit in still another embodiment of the spectral module in accordance with the present invention;
**[****Fig. 13****]** is a sectional view illustrating a manufacturing process of the photodetecting unit in the above-mentioned embodiment of the spectral module in accordance with the present invention;
**[****Fig. 14****]** is a sectional view illustrating a manufacturing process of the photodetecting unit in still another embodiment of the spectral module in accordance with the present invention; and
**[****Fig. 15****]** is a sectional view illustrating a manufacturing process of the photodetecting unit in the above-mentioned embodiment of the spectral module in accordance with the present invention.

### Description of Embodiments

In the following, preferred embodiments of the present invention will be explained in detail with reference to the drawings. In the drawings, the same or equivalent parts will be referred to with the same signs while omitting their overlapping descriptions.

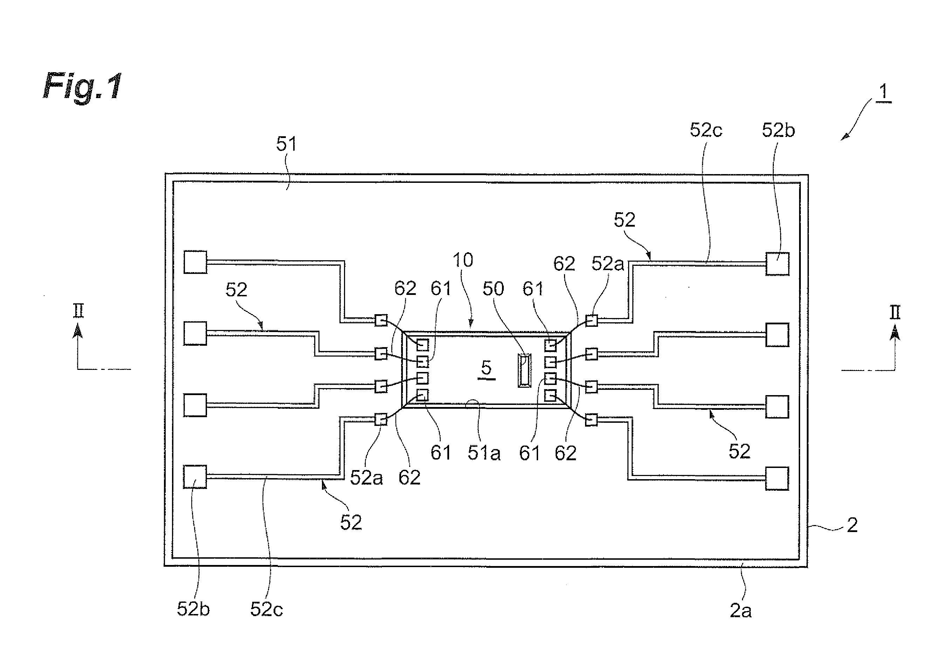

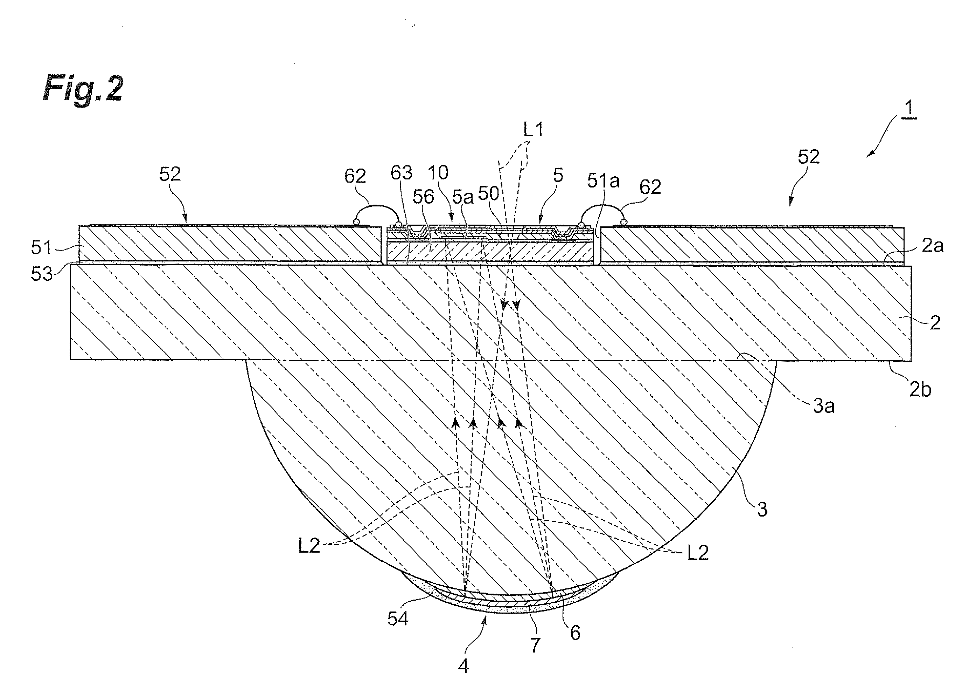

Fig. 1 is a plan view of an embodiment of the spectral module in accordance with the present invention, while Fig. 2 is a sectional view taken along the line II-II of Fig. 1. As illustrated in Figs. 1 and 2, this spectral module 1 comprises a substrate (main unit) 2 which transmits therethrough light L1 incident thereon from its front face (predetermined surface) 2a side, a lens unit (main unit) 3 which transmits the light L1 having entered the substrate 2, a spectroscopic unit 4 which spectrally resolves the light L1 having entered the lens unit 3 and reflects it toward the front face 2a, and a photodetector 5 which detects light L2 spectrally resolved by the spectroscopic unit 4. The spectral module 1 is a micro spectral module which spectrally resolves the light L1 with the spectroscopic unit 4 into the light L2 corresponding to a plurality of wavelengths and detects the light L2 with the photodetector 5, thereby measuring a wavelength distribution of the light L1, the intensity of a specific wavelength component, and the like.

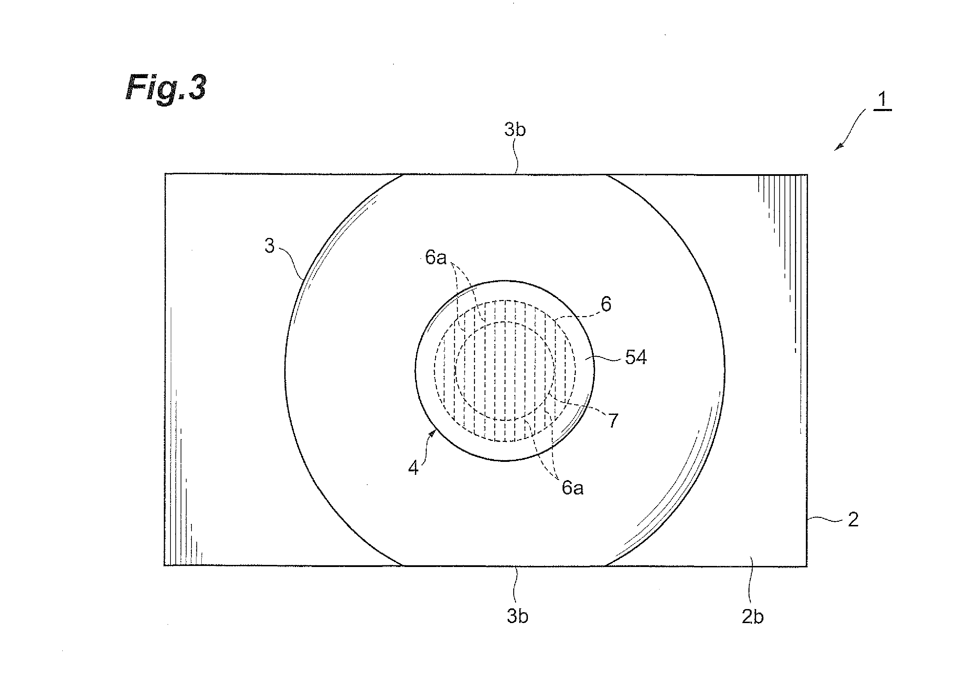

Fig. 3 is a bottom plan view of the spectral module of Fig. 1. As illustrated in Figs. 2 and 3, the substrate 2 is formed into a rectangular plate (e.g., with a full length of 15 to 20 mm, a full width of 11 to 12 mm, and a thickness of 1 to 3 mm), while the lens unit 3 has such a form that a semispherical lens is cut off by two planes substantially parallel to each other and substantially orthogonal to its bottom face 3a so as to form side faces 3b (e.g., the form with a radius of 6 to 10 mm, a height of 5 to 8 mm, and the bottom face 3a having a full length of 12 to 18 mm and a full width (distance between the side faces 3b) of 6 to 10 mm). The substrate 2 and the lens unit 3 are integrally formed from any of light transmitting glass materials such as BK7, Pyrex (registered trademark), and silica, plastics, and the like such that the rear face 2b of the substrate 2 and the bottom face 3a of the lens unit 3 coincide with each other. The lens form may be either spherical or aspherical.

As illustrated in Figs. 1 and 2, a wiring board 51 shaped like a rectangular plate having an opening 51 a with a rectangular cross section is bonded to the front face 2a of the substrate 2 with a resin agent 53. The wiring board 51 is provided with leads (second leads) 52 made of a metal material. The leads 52 include a plurality of pad units 52a arranged about the opening 51a, a plurality of pad units 52b arranged in both longitudinal end portions of the wiring board 51, and a plurality of connection units 52c for connecting the corresponding pad units 52a, 52b to each other.

As illustrated in Figs. 2 and 3, the spectroscopic unit 4 is a reflection-type grating having a diffracting layer 6 formed on the outer surface of the lens unit 3, a reflecting layer 7 formed on the outer surface of the diffracting layer 6, and a passivation layer 54 covering the outer surfaces of the diffracting layer 6 and reflecting layer 7. The diffracting layer 6 is formed by arranging a plurality of grating grooves 6a in a row along the longitudinal direction of the substrate 2, while the extending direction of the grating groves 6a substantially coincides with a direction substantially orthogonal to the longitudinal direction of the substrate 2. The diffracting layer 6, which employs sawtooth blazed gratings, rectangular binary gratings, or sinusoidal holographic gratings, for example, is formed by photocuring an optical resin for a replica such as a photocurable epoxy, acrylic, or organic/inorganic hybrid resin. The reflecting layer 7, which is shaped like a film, is formed by vapor-depositing Al, Au, or the like onto the outer surface of the diffracting layer 6, for example. Regulating the area by which the reflecting layer 7 is formed can adjust the optical NA of the spectral module 1. The passivation layer 54, which is shaped like a film, is formed by vapor-depositing MgF₂, SiO₂, or the like onto the outer surfaces of the diffracting layer 6 and reflecting layer 7, for example.

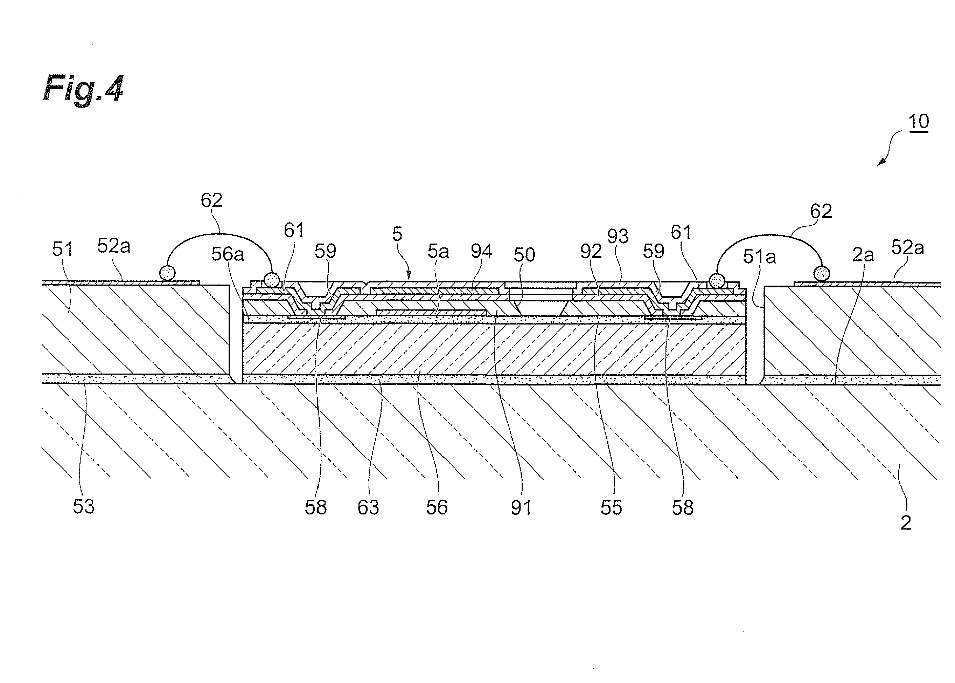

Fig. 4 is an enlarged sectional view of a main part of the spectral module of Fig. 1. As illustrated in Fig. 4, a photodetecting unit 10 constructed by bonding the photodetector 5 and a light transmitting plate (light transmitting member) 56 together is arranged within the opening 51a of the wiring board 51. Within the opening 51a, the light transmitting plate 56 is bonded to the front face 2a of the substrate 2 with an optical resin agent 63 which transmits the light L1, L2 therethrough. The light transmitting plate 56 is formed into a rectangular plate (e.g., with a full length of 5 to 10 mm, a full width of 1.5 to 3 mm, and a thickness of 0.3 to 1.8 mm) from any of light transmitting glass materials such as BK7, Pyrex (registered trademark), and silica, plastics, and the like and transmits therethrough the light L1, L2.

The photodetector 5 is bonded to the front face 56a of the light transmitting plate 56 with an optical resin agent 55 which transmits therethrough the light L1, L2. The photodetector 5 has a semiconductor substrate (photodetecting substrate) 91 shaped like a rectangular plate (e.g., with a full length of 5 to 10 mm, a full width of 1.5 to 3 mm, and a thickness of 10 to 100 µm), while the surface of the semiconductor substrate 91 on the spectroscopic unit 4 side is formed with a photodetecting section 5a. The photodetecting section 5a is a CCD image sensor, a PD array, a CMOS image sensor, or the like, in which a plurality of channels are arranged in a row along a direction substantially orthogonal to the extending direction of the grating grooves 6a in the spectroscopic unit 4 (i.e., along the arranging direction of the grating grooves 6a).

The semiconductor substrate 91 is formed with a light transmitting hole 50, arranged parallel with the photodetecting section 5a in the channel arrangement direction, for transmitting therethrough the light L1. proceeding to the spectroscopic unit 4. The light transmitting hole 50, which is a slit (e.g., with a length of 0.5 to 1 mm and a width of 10 to 100 µm) extending in a direction substantially orthogonal to the longitudinal direction of the substrate 2, is formed by etching or the like while being aligned with the photodetecting section 5a with high precision.

A plurality of electrodes 58 made of a metal material such as Al are formed on the surface of the semiconductor substrate 91 on the spectroscopic unit 4 side. On the surface of the semiconductor substrate 91 on the side opposite to the spectroscopic unit 4, a plurality of terminal electrodes 61 made of a metal material such as Al are formed so as to correspond to the electrodes 58 and electrically connected to their corresponding electrodes 58 with through-electrodes 59 made of a metal material such as Al.

The through-electrodes 59 are integrally formed with their corresponding terminal electrodes 61 on an insulating layer 92 on the semiconductor substrate 91 and covered with a passivation layer 93 so as to expose the electrical junctions of the terminal electrodes 61. Examples of materials for the insulating layer 92 and passivation layer 93 include resins, SiO₂, SiN, and SiON. Each terminal electrode 61 is connected to its corresponding pad unit 52a of the wiring board 51 through a wire 62 at the electrical junction exposed from the passivation layer 93. As a consequence, electric signals generated in the photodetecting section 5a are taken out through the electrodes 58, through-electrodes 59, terminal electrodes 61, wires 62, and leads 52 of the wiring board 51.

A light shielding layer 94 made of a metal material such as Al is formed on the surface of the semiconductor substrate 91 on the side opposite to the spectroscopic unit 4. The light shielding layer 94 is formed on the insulating layer 92 on the semiconductor substrate 91 and covered with the passivation layer 93. The light shielding layer 94 covers the photodetecting section 5a as seen in the thickness direction of the semiconductor substrate 91 and blocks the light proceeding to the spectroscopic unit 4 without passing through the light transmitting hole 50 and the light directly entering the photodetecting section 5a. As with the light shielding layer 94, the wiring board 51 functions to block the light proceeding to the spectroscopic unit 4 without passing through the light transmitting hole 50.

In thus constructed spectral module 1, the light L1 enters the substrate 2 from the front face 2a side through the light transmitting hole 50 of the photodetector 5, optical resin agent 55, light transmitting plate 56, and optical resin agent 63 and reaches the spectroscopic unit 4 through the substrate 2 and lens unit 3. The light L1 having reached the spectroscopic unit 4 is spectrally resolved by the spectroscopic unit 4 into the light L2 corresponding to a plurality of wavelengths. The spectrally resolved light L2 is reflected by the spectroscopic unit 4 toward the front face 2a of the substrate 2, so as to advance through the lens unit 3 and substrate 2, thereby reaching the photodetecting section 5a of the photodetector 5 through the optical resin agent 63, light transmitting plate 56, and optical resin agent 55. The light L2 having reached the photodetecting section 5a is detected by the photodetector 5.

A method for manufacturing the above-mentioned spectral module 1 will now be explained.

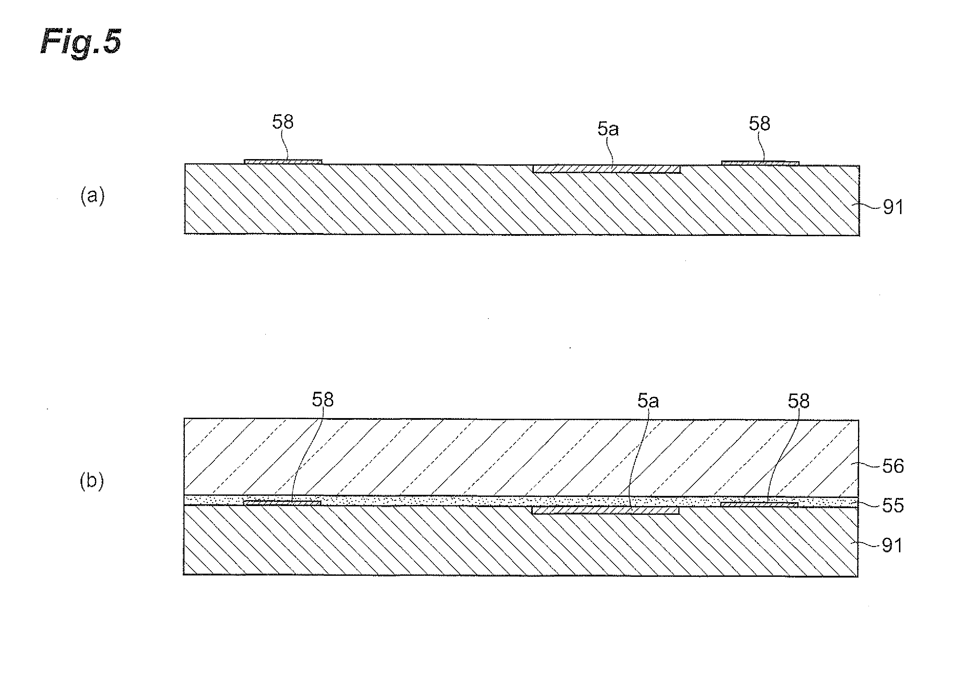

First, the photodetecting unit 10 constructed by bonding the photodetector 5 formed with the light transmitting hole 50 and the light transmitting plate 56 together is prepared. Specifically, as illustrated in Fig. 5(a), the electrodes 58 are formed on one surface of the semiconductor substrate 91 having the one surface provided with the photodetecting section 5a. Thereafter, as illustrated in Fig. 5(b), the light transmitting plate 56 is bonded to the one surface of the semiconductor substrate 91 with the optical resin agent 55. The thickness of the optical resin agent 55 is 10 to 50 µm, for example.

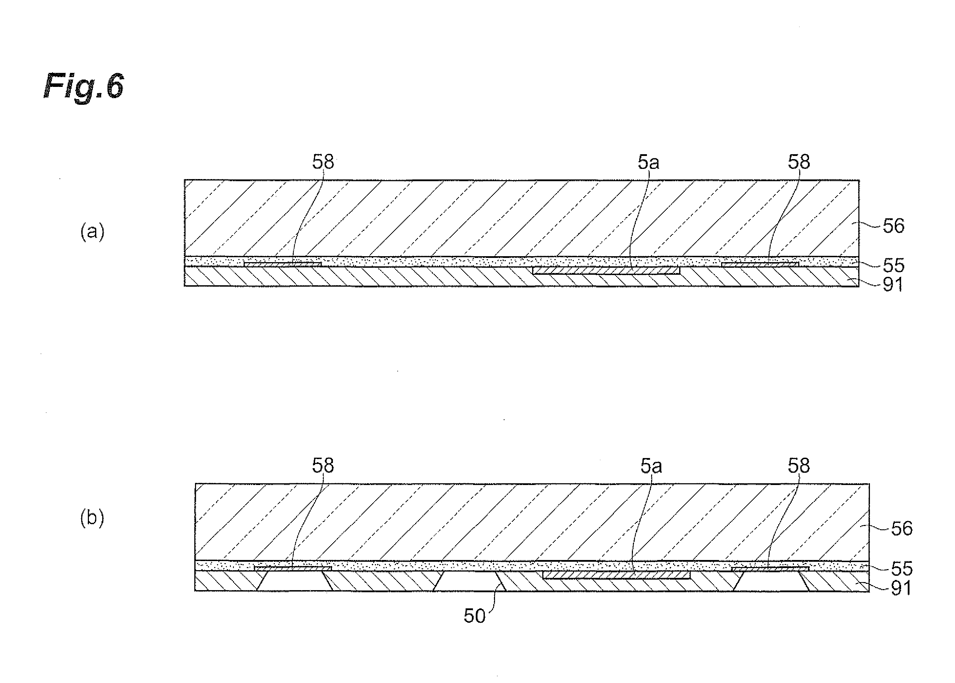

Subsequently, as illustrated in Fig. 6(a), the semiconductor substrate 91 is thinned by polishing the other surface thereof, for example. The semiconductor substrate 91 is thinned from a thickness of 0.3 to 1 mm to that of 10 to 100 µm, for example. Thereafter, as illustrated in Fig. 6(b), a resist is patterned on the other surface of the semiconductor substrate 91, and dry etching is performed while using the resist as a mask, so as to form the light transmitting hole 50 and expose the electrodes 58 on the other side.

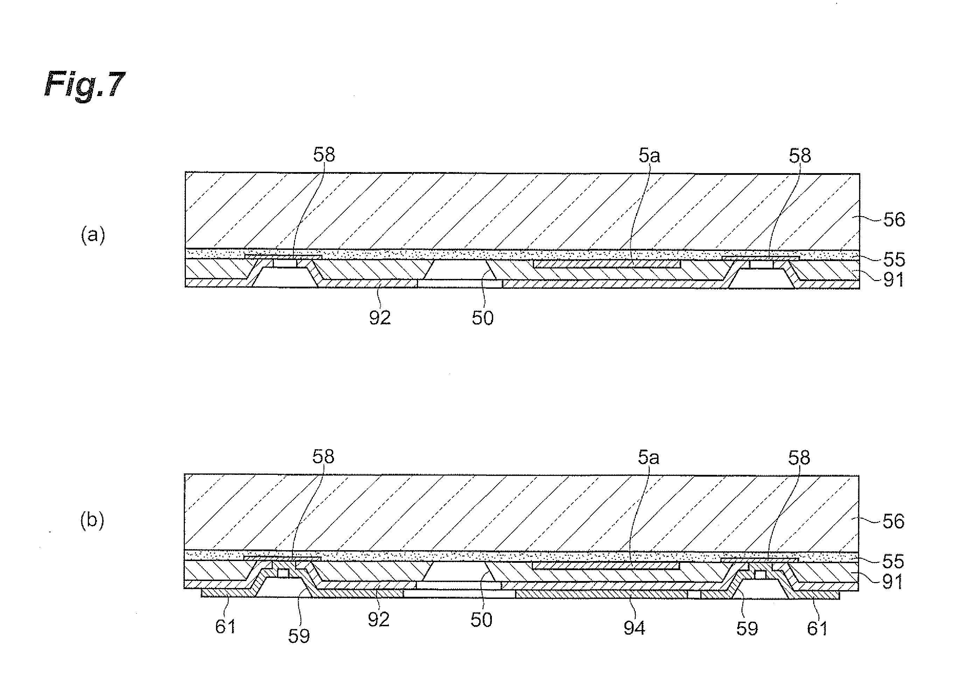

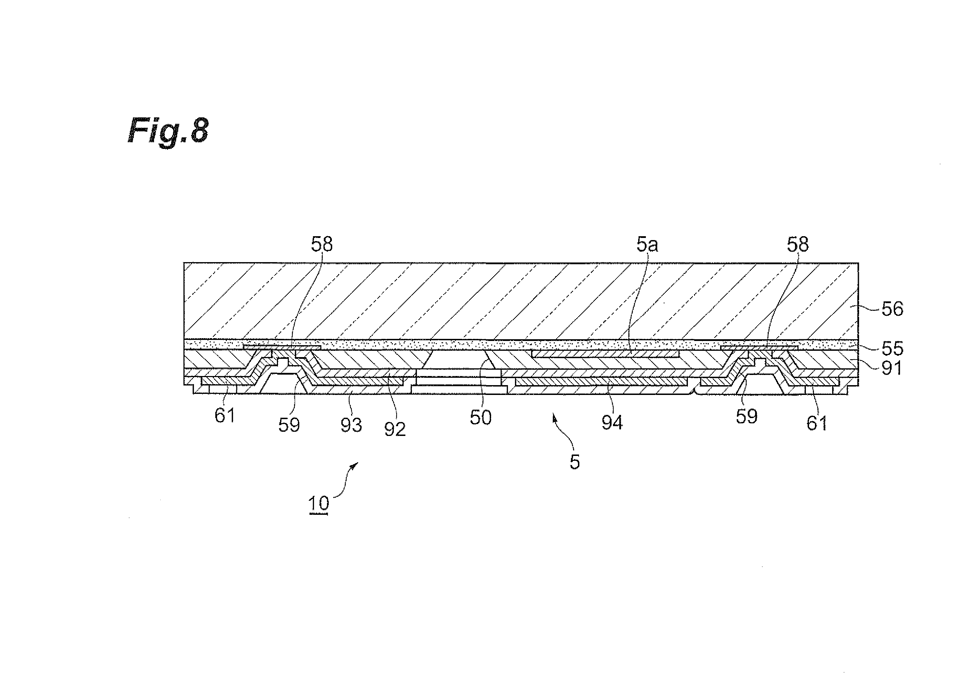

Next, as illustrated in Fig. 7(a), the insulating layer 92 is formed on the other surface of the semiconductor substrate 91 except for the light transmitting hole 50 and a part of the electrodes 58. The thickness of the insulating layer 92 is 0.5 to 5 µm, for example. Thereafter, as illustrated in Fig. 7(b), the through electrodes 59, terminal electrodes 61, and light shielding layer 94 are formed on the insulating layer 92 on the semiconductor substrate 91. Finally, as illustrated in Fig. 8, the passivation layer 93 is formed so as to cover the terminal electrodes 61 and light shielding layer 94 except for the light transmitting hole 50 and a part of each terminal electrode 61, thus yielding the photodetecting unit 10.

The photodetecting unit 10 may be obtained by dicing a structure constructed by bonding together a semiconductor wafer including a plurality of semiconductor substrates 91 and a glass wafer including a plurality of light transmitting plates 56.

While preparing the photodetecting unit 10, the substrate 2 and the lens unit 3 are integrally formed by a mold, and then the lens unit 3 is formed with the spectroscopic unit 4. Specifically, a light transmitting master grating inscribed with gratings corresponding to the diffracting layer 6 is pressed against an optical resin for a replica dripped near the vertex of the lens unit 3. The optical resin for a replica is cured by irradiation with light in this state, and then preferably cured by heating for stabilization, so as to form the diffracting layer 6 having a plurality of grating grooves 6a. Thereafter, the master grating is released, Al, Au, or the like is vapor-deposited onto the outer surface of the diffracting layer 6 wholly or through a mask, so as to form the reflecting layer 7, and MgF₂, SiO₂, or the like is further vapor-deposited onto the outer surfaces of the diffracting layer 6 and reflecting layer 7, so as to form the passivation layer 54.

Then, the photodetecting unit 10 is bonded to the front face 2a of the substrate 2 with the optical resin agent 63. Further, the wiring board 51 is bonded to the front face 2a of the substrate 2 with the resin agent 53. Finally, the terminal electrodes 61 of the photodetector 5 are electrically connected to their corresponding leads 52 of the wiring board 51 with the wires 62, so as to yield the spectral module 1.

In the method for manufacturing the spectral module 1, as explained in the foregoing, the photodetecting unit 10 constructed by bonding the photodetector 5 and the light transmitting plate 56 together is attached to the front face 2a of the substrate 2 by interposing the optical resin agent 63 between the front face 2a of the substrate 2 and the light transmitting plate 56. Therefore, when attaching the photodetecting unit 10 to the substrate 2 with the optical resin agent 63, the light transmitting hole 50 of the photodetector 5 is covered with the light transmitting plate 56, whereby the optical resin agent 63 is prevented from intruding into the light transmitting hole 50. Hence, thus manufactured spectral module 1 can prevent refraction, scattering, and the like from occurring and make the light L1 appropriately enter the substrate 2.

In the step of preparing the photodetecting unit 10, the semiconductor substrate 91 is formed with the light transmitting hole 50 after the semiconductor substrate 91 provided with the photodetecting section 5a and the light transmitting plate 56 are bonded together, whereby matters which may cause refraction, scattering, and the like to occur can reliably be prevented from intruding into the light transmitting hole 50.

Since the light transmitting plate 56 mounted with the photodetector 5 is attached to the front face 2a of the substrate 2 with the optical resin agent 63, the photodetecting section 5a of the photodetector 5 can be prevented from being damaged at the time of attaching. Also, the light transmitting plate 56 can strongly be pressed against the front face 2a of the substrate 2 at the time of attaching, thus making it possible to homogenize the thickness of the optical resin agent 63 and remove bubbles from within the optical resin agent 63.

Since the light transmitting hole 50 of the photodetector 5 is closed with the light transmitting plate 56, vacuum suction with flat collets and the like can be carried out in a stable state. Further, in wire bonding for the terminal electrodes 61, the photodetector 5 is supported by the light transmitting plate 56, so that the semiconductor substrate 91 can be prevented from being broken even when it is thin, whereby reliable wire bonding can be achieved.

In the spectral module 1, the volume of the light transmitting plate 56 is smaller than that of the substrate 2, so that the heat capacity of the light transmitting plate 56 is smaller than that of the substrate 2 (i.e., the light transmitting plate 56 is more similar to the photodetector 5 than the substrate 2 in terms of the volume and heat capacity). This makes the light transmitting plate 56 expand/shrink in a state more similar to the photodetector 5 than the substrate 2 when the temperature in the surroundings of the spectral module 1 changes. Therefore, distortions occurring in the photodetector 5 because of changes in the temperature in the surroundings of the spectral module 1 can be reduced as compared with the case where the photodetector 5 is mounted to the substrate 2.

If the light transmitting plate 56 is provided with a filtering function, it can eliminate the second-order light and stray light. Changing the thickness of the light transmitting plate 56 can readily alter the optical path length of the light L1, L2, whereby the wavelength range and resolution can be adjusted easily.

The present invention is not limited to the above-mentioned embodiment.

For example, the semiconductor substrate 91 and the light transmitting plate 56 may be bonded together by direct bonding. As with bonding the semiconductor substrate 91 and the light transmitting plate 56 together by the optical resin agent 55, the direct bonding can bond the semiconductor substrate 91 and the light transmitting plate 56 together easily and reliably.

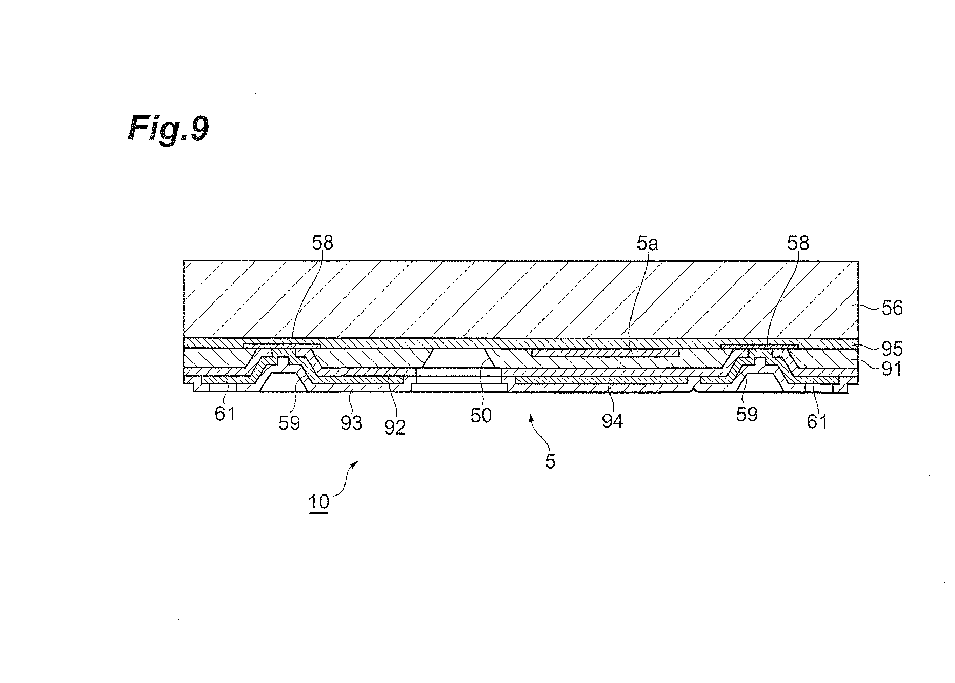

A specific example of the direct bonding will now be explained. As illustrated in Fig. 9, a flattening layer 95 is formed on one surface of the semiconductor substrate 91 so as to cover the photodetecting section 5a and the electrodes 58, the flattening layer 95 of the semiconductor substrate 91 and the light transmitting plate 56 are caused to oppose each other in a vacuum thereafter, and their opposing surfaces are sputtered with Ar ions and the like, so as to achieve surface activation. In the vacuum, the semiconductor substrate 91 and the light transmitting plate 56 are pressed against each other, so as to be joined together. For example, the flattening layer 95 is formed with a thickness of 10 to 50 µm from SiO₂, SiN, SiON, or the like.

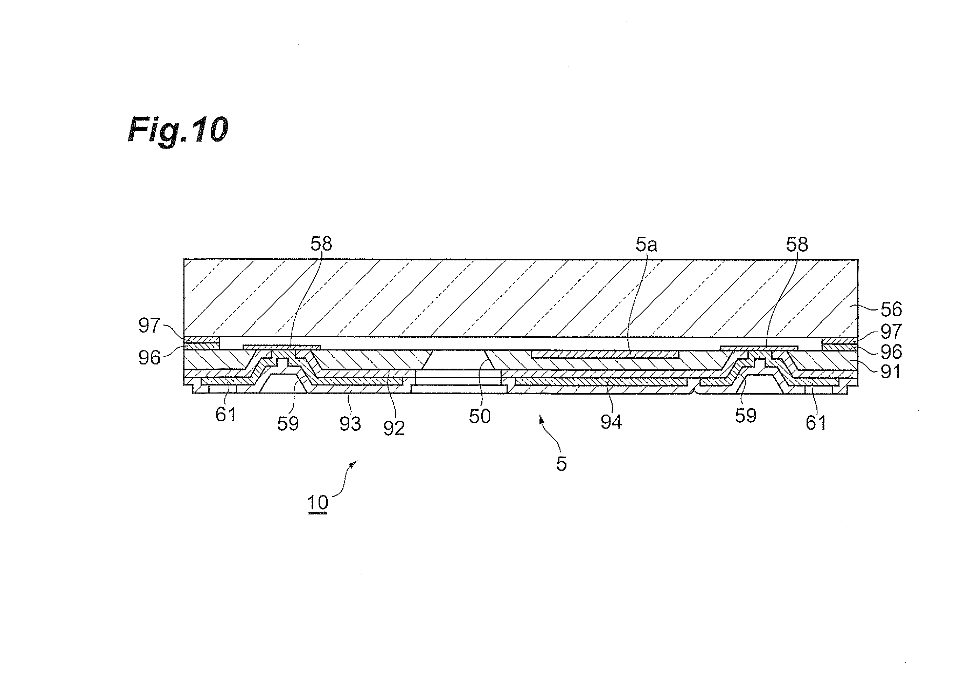

Another specific example of the direct bonding will now be explained. As illustrated in Fig. 10, while a rectangular ring-shaped metal pattern 96 is formed at a peripheral portion of one surface of the semiconductor substrate 91, the light transmitting plate 56 is formed with a rectangular ring-shaped metal pattern 97 corresponding to the metal pattern 96, the metal pattern 96 of the semiconductor substrate 91 and the metal pattern 97 of the light transmitting plate 56 are caused to oppose each other in a vacuum thereafter, and their opposing surfaces are sputtered with Ar ions and the like, so as to achieve surface activation. In the vacuum, the semiconductor substrate 91 and the light transmitting plate 56 are pressed against each other, so as to be joined together. The metal pattern 96 of the semiconductor substrate 91 and the metal pattern 97 of the light transmitting plate 56 may be joined together by solder.

When bonding the semiconductor substrate 91 and the light transmitting plate 56 together by the optical resin agent 55, the optical resin agent 55 approaching the light transmitting hole 50 may be removed by carrying out dry etching after forming the insulating layer 92, while providing the semiconductor substrate 91 with the light transmitting hole 50, for example. This can more reliably prevent the light L1 incident on the substrate 2 from being refracted, scattered, and so forth.

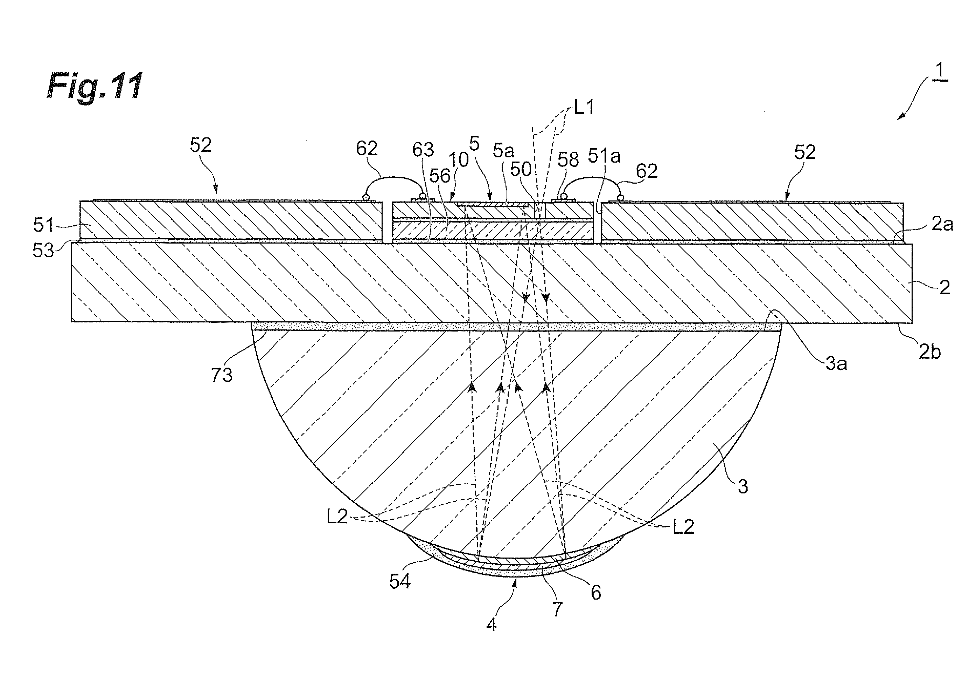

As illustrated in Fig. 11, the substrate 2 and the lens unit 3 may be formed as separate bodies and joined together by an optical resin agent 73. In this case, a light absorbing layer having a light transmitting hole for transmitting therethrough the light L1. proceeding to the spectroscopic unit 4 and a light transmitting hole for transmitting therethrough the light L2 proceeding to the photodetecting section 5a of the photodetector 5 may be formed between the substrate 2 and the lens unit 3. This structure can restrict advancing divergent light such as to make it reach a desirable area and effectively inhibit stray light from entering the photodetector 5. Making the light transmitting holes with respective sizes different from each other can adjust the optical NA. Such a light absorbing layer may be formed between the light transmitting plate 56 and the photodetector 5.

As illustrated in Fig. 11, a so-called back-illuminated element may be employed as the photodetector 5. In this case, the electrodes 58 are located on the outer side together with the photodetecting section 5a and thus may be employed as terminal electrodes so as to be connected to the pad parts 52a of the wiring board 51 with the wires 62. When the photodetector 5 is of the back-illuminated type, it will be preferred if a light shielding film is formed such as to cover the photodetecting section 5a of the photodetector 5.

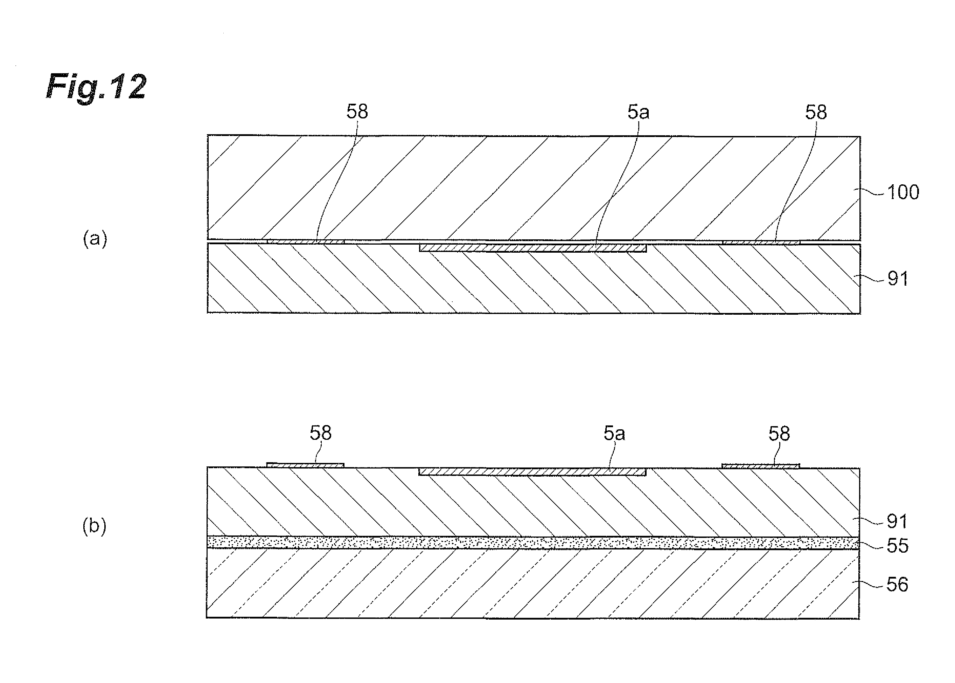

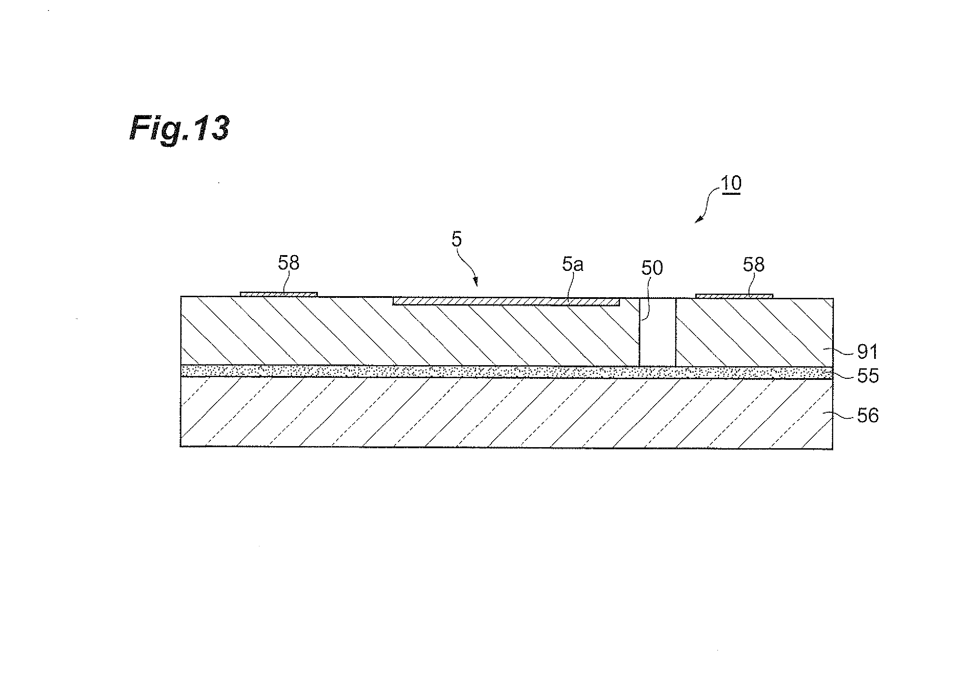

A method for manufacturing the photodetecting unit 10 when bonding the semiconductor substrate 91 and the light transmitting plate 56 together by the optical resin agent 55 in the case where the photodetector 5 is of the back-illuminated type will now be explained. First, as illustrated in Fig. 12(a), a handle substrate 100 is attached by an easily releasable tape, resin agent, or the like to one surface of the semiconductor substrate 91 having the one surface provided with the photodetecting section 5a. Then, the semiconductor substrate 91 is handled with the handle substrate 100, the other surface of the semiconductor substrate 91 is polished when necessary, and so forth, so as to make the semiconductor substrate 91 thinner, and thereafter, as illustrated in Fig. 12(b), the light transmitting plate 56 is bonded to the other surface of the semiconductor substrate 91 by the optical resin agent 55. Here, the handle substrate 100 is released from the one surface of the semiconductor substrate 91. Subsequently, as illustrated in Fig. 13, a resist is patterned on the one surface of the semiconductor substrate 91, and dry etching is carried out while using the resist as a mask, so as to form the light transmitting hole 50. The part of the optical resin layer 55 exposed to the inside of the light transmitting hole 50 may be removed by plasma etching with O₂ and the like.

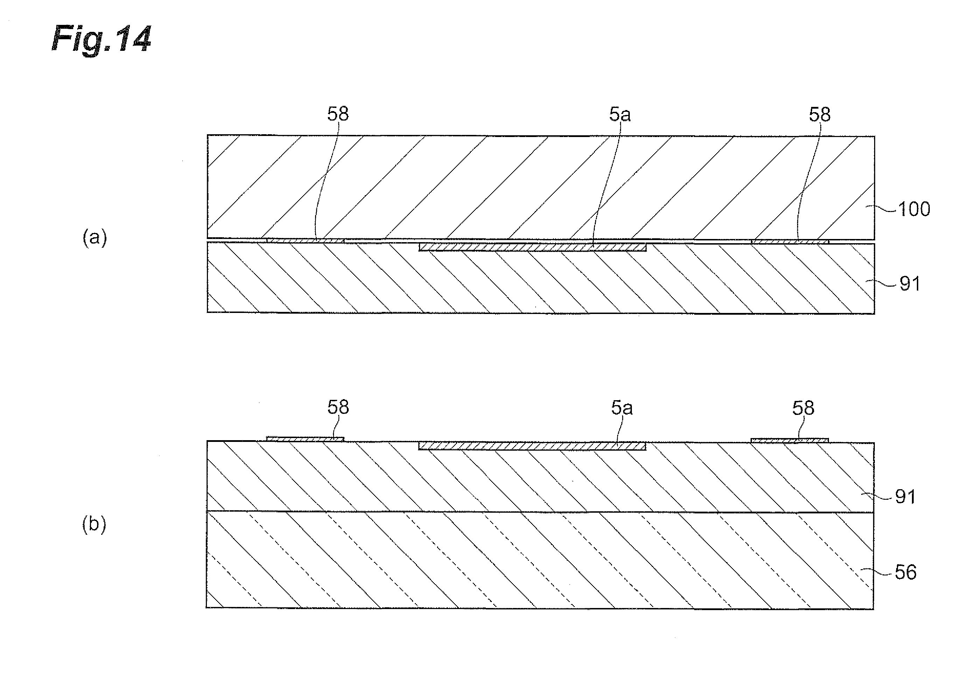

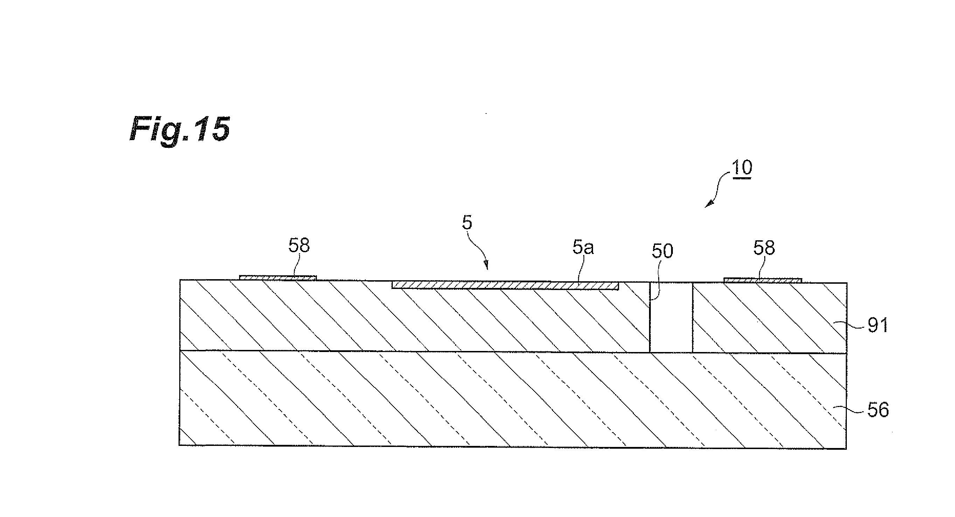

A method for manufacturing the photodetecting unit 10 when bonding the semiconductor substrate 91 and the light transmitting plate 56 together by direct bonding in the case where the photodetector 5 is of the back-illuminated type will now be explained. First, as illustrated in Fig. 14(a), the handle substrate 100 is attached by an easily releasable tape, resin agent, or the like to one surface of the semiconductor substrate 91 having the one surface provided with the photodetecting section 5a. Then, the semiconductor substrate 91 is handled with the handle substrate 100, the other surface of the semiconductor substrate 91 is polished when necessary, and so forth, so as to make the semiconductor substrate 91 thinner, and thereafter, as illustrated in Fig. 14(b), the light transmitting plate 56 is bonded to the other surface of the semiconductor substrate 91 by direct bonding. Here, the handle substrate 100 is released from the one surface of the semiconductor substrate 91. Subsequently, as illustrated in Fig. 15, a resist is patterned on the one surface of the semiconductor substrate 91, and dry etching is carried out while using the resist as a mask, so as to form the light transmitting hole 50.

The lens unit 3 and the diffracting layer 6 may be integrally formed from a light transmitting low melting glass material for shaping a replica or the like. The bonding of the light transmitting plate 56 to the front face 2a of the substrate 2, bonding of the wiring board 51 to the front face 2a of the substrate 2, and the like may be achieved directly or indirectly through a certain layer.

### Industrial Applicability

In the spectral module, the present invention can prevent refraction, scattering, and the like from occurring and make light appropriately enter the main unit.

### Reference Signs List

1 ... spectral module; 2... substrate (main unit); 2a...front face (predetermined surface); 3...lens unit (main unit); 4...spectroscopic unit; 5...photodetector; 5a...photodetecting section; 10...photodetecting unit; 50...light transmitting hole; 55...optimal resin agent (second optical resin agent); 56...light transmitting plate (light transmitting member); 63...optimal resin agent (first optical resin agent); 91... semiconductor substrate (photodetecting substrate)

## Claims

1. A method for manufacturing a spectral module comprising a main unit for transmitting light therethrough, a spectroscopic unit for spectrally resolving light having entered the main unit from a predetermined surface side of the main unit and reflecting the light toward the predetermined surface, and a photodetector for detecting the light spectrally resolved by the spectroscopic unit;
the method comprising the steps of:
preparing a photodetecting unit constructed by bonding together the photodetector formed with a light transmitting hole for transmitting therethrough light proceeding to the spectroscopic unit and a light transmitting member for transmitting therethrough light proceeding to the spectroscopic unit through the light transmitting hole and light proceeding from the spectroscopic unit to a photodetecting section of the photodetector; and
attaching the photodetecting unit to the main unit by interposing a first optical resin agent between the predetermined surface and the light transmitting member.

2. A method for manufacturing a spectral module according to claim 1, wherein, in the step of preparing the photodetecting unit, a photodetecting substrate provided with the photodetecting section and the light transmitting member are bonded together and then the photodetecting substrate is formed with the light transmitting hole.

3. A method for manufacturing a spectral module according to claim 2, wherein the photodetecting substrate and the light transmitting member are bonded together by a second optical resin agent.

4. A method for manufacturing a spectral module according to claim 3, wherein the second optical resin agent approaching the light transmitting hole is removed, while the photodetecting substrate is formed with the light transmitting hole.

5. A method for manufacturing a spectral module according to claim 2, wherein the photodetecting substrate and the light transmitting member are bonded together by direct bonding.

6. A spectral module comprising:
a main unit for transmitting light therethrough;
a spectroscopic unit for spectrally resolving light having entered the main unit from a predetermined surface side of the main unit and reflecting the light toward the predetermined surface; and
a photodetector for detecting the light spectrally resolved by the spectroscopic unit;
wherein a photodetecting unit is constructed by bonding together the photodetector formed with a light transmitting hole for transmitting therethrough light proceeding to the spectroscopic unit and a light transmitting member for transmitting therethrough light proceeding to the spectroscopic unit through the light transmitting hole and light proceeding from the spectroscopic unit to a photodetecting section of the photodetector; and
wherein the photodetecting unit is attached to the main unit by a first optical resin agent interposed between the predetermined surface and the light transmitting member.
